# EUROPÄISCHE PATENTANMELDUNG

(11) **EP 1 670 217 A1**
(43) Veröffentlichungstag der Anmeldung: **14.06.2006**
(21) Anmeldenummer: 05023386.5
(22) Anmeldetag: 26.10.2005
(51) Int. Cl.: H04M 1/02, E05D 11/10, E05F 1/12

(54) **Mobiltelefon mit relativ zueinander bewegbaren Geräteteilen und Verwendung einer Stab- oder Blattfeder hierzu**

(30) Priorität: 08.12.2004 DE 102004059236
(71) Anmelder: Lumberg Connect GmbH & Co. KG, 58579 Schalksmühle (DE)
(72) Erfinder: Richter, Michael, 58579 Schalksmühle (DE); Fuhrmeister, Lothar, 58579 Schalksmühle (DE)
(74) Vertreter: Ostriga, Sonnet, Wirths & Roche

(57) **Zusammenfassung**

Dargestellt und beschrieben sind Geräte wie Mobiltelefon mit relativ zueinander bewegbaren Geräteteilen wie einem Basis- bzw. Tatstaturteil (Unterschale) und einem Displayteil (Oberschale), wobei die beiden Geräteteile eine erste und eine zweite stabile Endposition zueinander einnehmen können und wobei ein Steuermechanismus vorgesehen ist, der die beiden Geräteteile unter Vermittlung wenigstens eines Federorgans aus einer beliebigen Zwischenposition heraus in die eine oder andere relative Endposition drängt. Ein besonders einfacher erfindungsgemäßer Steuermechanismus ist dadurch gekennzeichnet, dass das Federorgan als stab- oder blattförmige Biegefeder ausgebildet ist, die an dem ersten der beiden Geräteteile gehalten ist, während mit dem zweiten Geräteteil ein Steuerorgan mindestens mittelbar bewegungsverbunden ist, welches das Federorgan bewegungsabhängig auslenkt und entsprechend spannt. Das Steuerorgan ist eine Nockenscheibe mit die Biegefeder beaufschlagenden Steuerflächen. Im Einzelfall dreht das Steuerorgan um eine zur Biegefeder parallele Achse (Anwendung bei Klapphandys). Alternativ ist das Steuerorgan zwischen zwei parallelen Biegefedern angeordnet und dreht um eine zu den Biegefedern quere Achse (Anwendung bei Drehhandys). Eine Weiterentwicklung dieses Mechanismus zur Anwendung an Schiebe- oder Sliderhandys ist dadurch gekennzeichnet, dass das Steuerorgan mit dem zugehörigen Geräteteil über einen Lenker verbunden ist, der eine Linearbewegung des Geräteteils in eine Drehbewegung des Steuerorgans umsetzt.

## Beschreibung

Die Erfindung betrifft ein Gerät mit zwei relativ zueinander bewegbaren Geräteteilen, wobei die beiden Geräteteile eine erste und eine zweite stabile Endposition zueinander einnehmen können und wobei ein Steuermechanismus vorgesehen ist, der die beiden Geräteteile unter Vermittlung wenigstens eines Federorgans aus einer beliebigen Zwischenposition heraus in die eine oder andere relative Endposition drängt.

Die Erfindung zielt insbesondere auf Mobiltelefon mit einer Unterschale und einer Oberschale, die meist auch als Deckel bezeichnet wird. Die Unterschale beherbergt als Basisteil zumeist die wesentliche Elektronik des Geräts und in der Regel auch eine Tastatur, während die Oberschale auf der Innenseite und auch ggf. auf der Außenseite ein Display und/oder innen eine Tastatur aufweist.

Man unterscheidet hierbei im wesentlichen drei unterschiedliche Typen, nämlich den Klapptyp, den Drehtyp und den Schiebe- oder Slidertyp.

Bezogen auf das waagerechte Halten des Geräts wird beim Klapptyp der Deckel um eine Horizontalachse auf und zu geklappt. Sog. Klapphandys sind derzeit sehr häufig anzutreffen. Ein prominenter Vertreter dieser Gattung ist das Mobiltelefon CF62 der Firma Siemens.

Beim Drehtyp werden Unterteil und Oberteil um eine Vertikalachse gegeneinander verdreht. In der einen Stellung liegen beide Geräteteile deckungsgleich aufeinander. Wenn das Unterteil, also die Rückseite des Handys, um 90° gedreht wird, bis die Geräteteile etwa kreuzförmig zueinander stehen, erscheint auf der Ansichtsseite des Unterteils eine vollwertige Schreibmaschinen-Tastatur, wie dies z.B. bei dem Mobiltelefon SK65 der Firma Siemens der Fall ist.

Bei der dritten Gattung, dem Schiebetyp, wird die Oberschale in Längsrichtung des Geräts relativ zur Unterschale geradlinig verschoben. In der Ruhestellung liegen auch hier beide Geräteteile deckungsgleich aufeinander. Mit dem Aufschieben der Oberschale wird z.B. die Gerätetastatur im Basisteil zur Bedienung freilegt. Das Mobiltelefon SL65 der Firma Siemens ist ein weit verbreitetes Gerät dieser sog. Sliderhandys.

Allen Gerätetypen ist zueigen, dass ihre relativ zueinander bewegbaren Geräteteile in Bezug aufeinander zwei prominente Endstellungen aufweisen, während jegliche Zwischenstellung nur Übergang zwischen den Endstellungen ist. Hieraus resultiert für den Benutzer, dass ein Umstellen bzw. Umschalten von der einen in die andere Endstellung (die beiden Gebrauchsstellungen) "satt" vor sich gehen soll. Nach Wahl des Benutzers soll entweder die eine oder die andere Stellung sicher erreicht werden; Zwischenstellungen sollen sich nicht einstellen. Wesentlich ist dies vor allem für eine subjektiv als solide erfahrene Haptik, denn auch der diesbezügliche Bedienungskomfort trägt zu einer als hochwertig empfundenen Anmutung des Geräts wesentlich bei.

Aus diesen Gründen werden beispielsweise die Gelenkachsen von Klapphandys so ausgestaltet und ausgelegt, dass der jeweilige Übergang des bewegbaren Geräteteils in die eine der beiden Endstellungen mittels eines Federn aufweisenden Steuermechanismus gefördert und sichergestellt wird. Dabei ist der Steuermechanismus so ausgelegt, dass jede Zwischenstellung labil ist und selbsttätig nicht aufrechterhalten bleibt.

Ein Beispiel für einen derartigen Steuermechanismus bei einem Klapphandy zeigt etwa US 6,085,387 A. Die im Klappgelenkbereich untergebrachte Steuervorrichtung umfasst einen festgehaltenen ersten und einen demgegenüber drehbeweglich angeordneten zweiten profilierten Steuerzapfen, der unter Wirkung einer Schraubenfeder gegen den ersten Steuerzapfen vorgespannt ist. Die Steuerzapfen weisen an ihren aneinander anliegenden Stirnseiten Steuerflächen auf, die so ausgebildet und angeordnet sind, dass die Geräteteile jeweils unter Federkraft in eine ihrer beiden Endstellungen gedrängt werden. Eine stabile Mittellage ist aufgrund der Profilierungen der Steuerflächen an den Steuerzapfen ausgeschlossen.

Zwar ist ein Steuermechanismus dieser bekannten Art zuverlässig, doch ist er auch vielteilig und damit aufwendig. Des weiteren ist er nur für die relativ langen und im Durchmesser großen Gelenke von Klapphandys geeignet.

Der vorliegenden Erfindung liegt daher die Aufgabe zugrunde, ein Gerät der als bekannt vorausgesetzten Art im Hinblick auf den Steuermechanismus zu vereinfachen. Zudem besteht erfindungsgemäß das Ziel, einen Steuermechanismus zu schaffen, der prinzipiell bei allen der drei eingangs genannten Typen von Geräten mit wenigstens zwei verstellbaren Geräteteilen verwendbar ist.

Die Erfindung löst diese Aufgabe mit den Merkmalen des unabhängigen Anspruchs 1 und ist dem entsprechend dadurch gekennzeichnet, dass das Federorgan als stab- oder blattförmige Biegefeder ausgebildet ist, die an dem ersten der beiden Geräteteile gehalten ist, während mit dem zweiten Geräteteil ein Steuerorgan mindestens mittelbar bewegungsverbunden ist, welches das Federorgan bewegungsabhängig auslenkt und entsprechend spannt.

Der wesentliche Kern der Erfindung besteht demnach darin, das die Streuervorrichtung im einfachsten Fall lediglich zwei Teile umfasst, nämlich eine Biegefeder an dem einen Geräteteil und ein Steuerorgan an dem anderen Geräteteil. Ein sehr wesentlicher Unterscheid gegenüber dem Stand der Technik ist dabei darin zu sehen, dass das Steuerorgan unmittelbar - und nicht erst über weitere Elemente - die Feder beaufschlagt bzw. von dieser beaufschlagt wird. Dies wird im wesentlichen dadurch erreicht, dass die Steuereinrichtung keine Schraubenfeder, sondern eine Biegefeder verwendet, an der sich z.B. eine Steuerkurve erstmals direkt abwälzen kann.

Die Erfindung schafft hiermit erkennbar eine wesentliche Vereinfachung, auch durch Minimierung der Anzahl der notwendigen Bauteile. Zudem schafft sie die Voraussetzung dafür, einen solchen Steuermechanismus auch in anderen Geräten als Klapphandys einsetzen zu können.

Gemäß einer ersten Ausgestaltung des erfindungsgemäßen Prinzips kann die wenigstens eine Biegefeder beidendig fixiert sein, wobei das Steuerorgan die Biegefeder im wesentlichen mittig beaufschlagt. Dabei ist es zweckmäßig, wenn die Biegefeder mit ihren beiden Enden in Biegefeder-Aufnahmen des zugehörigen Geräteteils eingesteckt bzw. eingerastet ist, was eine besonders einfache konstruktive sowie praxisgerechte Lösung darstellt.

Bevorzugt ist das Steuerorgan als Nockenscheibe ausgebildet, deren Umfangsfläche eine die Biegefeder beaufschlagende Steuerkurve aufweist.

Gemäß einer Ausführungsform weist das Steuerorgan eine Schwenkachse auf, die sich im wesentlichen parallel zur Längserstreckung der Biegefeder erstreckt. Eine solche Anordnung eignet sich vornehmlich für Geräte des Klapptyps.

Besonders vorteilhaft ist es, wenn die Biegefeder in einem dem einen Geräteteil zugeordneten Lagerbock eingespannt ist, der vorzugsweise zugleich eine Antriebswelle für das dem anderen Geräteteil zugeordnete Steuerorgan lagert. Dabei kann in einfacher Weise der Lagerbock schlitzhülsenförmige Aufnahmen zum Einclipsen der Enden der Biegefeder aufweisen wie auch mindestens eine schlitzhülsenförmige Aufnahme zum Einclipsen wenigstens eines Endes der Antriebswelle. Zudem kann das Steuerorgan werkstoffeinheitlich-stoff-schlüssig mit der Antriebswelle ausgebildet sein. Diese Merkmale bilden einen Steuermechanismus sehr einfach aus; seine Montage ist ohne Verwendung gesonderter Befestigungsmittel wie Schrauben, Nieten od. dgl. möglich

Für Drehgeräte wie auch für Schiebegeräte ist es vorteilhaft, wenn entsprechend weiterer Ausgestaltung der Erfindung das Steuerorgan eine Schwenkachse aufweist, die sich quer, insbesondere lotrecht, zur Längserstreckung der Biegefeder(n) erstreckt. Dabei kann die Schwenkachse des Steuerorgans mit der Achse zusammenfallen, um welche die beiden Geräteteile relativ zueinander verschwenkbar sind.

Mit weiterem Vorteil definiert das Steuerorgan eine Hauptebene, in der auch die wenigstens eine Biegefinder angeordnet ist. Ein besonderer Vorteil ergibt sich dadurch, dass aufgrund dieser Anordnung der gesamte Steuermechanismus sehr flach baut und sich daher optimal platzsparend zwischen zwei zu verdrehende oder zu verschiebende Geräteteile integrieren lässt.

In diesem Zusammengang ist es des weiteren besonders vorteilhaft, wenn zwei in einem Parallelabstand zueinander angeordnete Biegefedern vorgesehen sind, zwischen denen das Steuerorgan in derselben Ebene angeordnet ist. Bei praktisch unverändert kleiner Bauform im Unterschied zur Anordnung nur einer Biegefeder können hiermit die Federkräfte erhöht werden bzw. schwächere Federn zur Anwendung gelangen. Zudem findet eine Kontaktierung zwischen dem Steuerorgan und den Biegefedern auf zwei gegenüberliegenden Seiten statt, was sich in einer optimalen Belastung bzw. Beanspruchung sowohl des Steuerorgans als auch der Biegefedern positiv auswirkt.

Eine nur geringfügige Modifikation des erfindungsgemäßen Prinzips für den Steuermechanismus an Geräten des Drehtyps macht die Erfindung in geschickter Art und Weise auch für Schiebe- oder Slidergeräte nutzbar. Danach ist vorgesehen, dass das Steuerorgan mit dem zugehörigen Geräteteil über einen Lenker verbunden ist, der eine Linearbewegung des verschiebbaren Geräteteils in eine Drehbewegung des mit dem anderen Geräteteil verbundenen Steuerorgans umsetzt. Im Unterschied zum Steuermechanismus für ein Gerät des Drehtyps ist also lediglich zusätzlich der Lenker erforderlich, der gemäß einer geschickten Weiterbildung z. B. als einfache Lenkerstange ausgeführt sein kann, deren beide Enden jeweils mit dem zugeordneten Geräteteil und dem Steuerorgan schwenkbeweglich steckverbunden sind.

Insgesamt stellt die Erfindung gattungsgemäße mehrteilige Geräte zur Verfügung, die sich hinsichtlich ihrer Steuervorrichtung zur Relativbewegung der Geräteteile zueinander durch minimalen baulichen Aufwand auszeichnen. Nicht zuletzt aufgrund dieses geringen Aufwandes und der Ausführung der Federelemente als Biegefedern lässt sich die Einrichtung besonders klein bauen, was wegen der Anforderungen an die immer stärker zunehmende Miniaturisierung von insbesondere Mobiltelefonen, Handhelds bzw. PDA's, Minicomputern u. dgl. von besonderer Bedeutung ist.

Im übrigen wird die Erfindung nachfolgend unter Bezugnahme auf in den beiliegenden Zeichnungen dargestellte Ausführungsbeispiele näher erläutert. Es zeigen:
- Fig. 1: eine schematische perspektivische Ansicht eines Mobiltelefon des Klapptyps mit aufgeklapptem Displayteil,
- Fig. 2: eine schematische perspektivische Ansicht eines Mobiltelefon des Drehtyps mit in Offenstellung gedrehten Geräteteilen,
- Fig. 3: eine schematische perspektivische Ansicht eines Mobiltelefon des Schiebetyps mit aufgeschobenem Displayteil,
- Fig.4-6: perspektivische Ansichten einem bei einem Gerät entsprechend Fig. 1 eingesetzten Steuermechanismus in verschiedenen Positionen,
- Fig. 7-9: den Fig. 4-6 zugeordnete Querschnitte durch die darin gezeigten Ansichten der Steuereinrichtung,
- Fig. 10: eine sehr schematische perspektivische Ansicht eines Geräts des Drehtyps entsprechend Fig. 2, jedoch in seiner ersten Gebrauchsstellung oder Basiskonfiguration,
- Fig. 11: das Gerät aus Fig. 10 in einer zweiten oder SonderGebrauchsstellung entsprechend Fig. 2,
- Fig. 12-14: schematische Darstellungen der Steuereinrichtung des in den Fig. 2 sowie 10 und 11 gezeigten Geräts, wobei Fig. 12 der Geräteeinstellung nach Fig. 10 und Fig. 14 der Geräteeinstellung nach Fig. 2 und 11 entspricht, während Fig. 13 eine Zwischenposition veranschaulicht,
- Fig. 15: eine wiederum sehr schematische perspektivische Ansicht eines Geräts des Schiebetyps nach Fig. 3, jedoch in seiner ersten Gebrauchsstellung oder Normalkonfiguration,
- Fig. 16: das Gerät aus Fig. 15 in einer zweiten Gebrauchsstellung entsprechend Fig. 3 mit gegenüber dem unteren Geräteteil zurückgeschobenem oberen Geräteteil, und
- Fig. 17-19: schematische Darstellungen der Steuereinrichtung des in den Fig. 3 sowie 15 und 16 gezeigten Geräts, wobei Fig. 17 der Geräteeinstellung nach Fig. 15 und Fig. 19 der Geräteeinstellung nach Fig. 3 und 16 entspricht, während Fig. 18 eine Zwischenposition veranschaulicht.

Die nachfolgende Beschreibung bezieht sich auf Mobiltelefone (Handys), obgleich die vorliegende Erfindung nicht darauf beschränkt ist. Sie lässt sich grundsätzlich bei Geräten anwenden, bei denen wenigstens zwei Geräteteile relativ zueinander geklappt, verdreht oder verschoben werden, wenn es darauf ankommt, dass das Gerät jeweils eine der beiden charakteristischen Endlagen zwingend einnehmen soll.

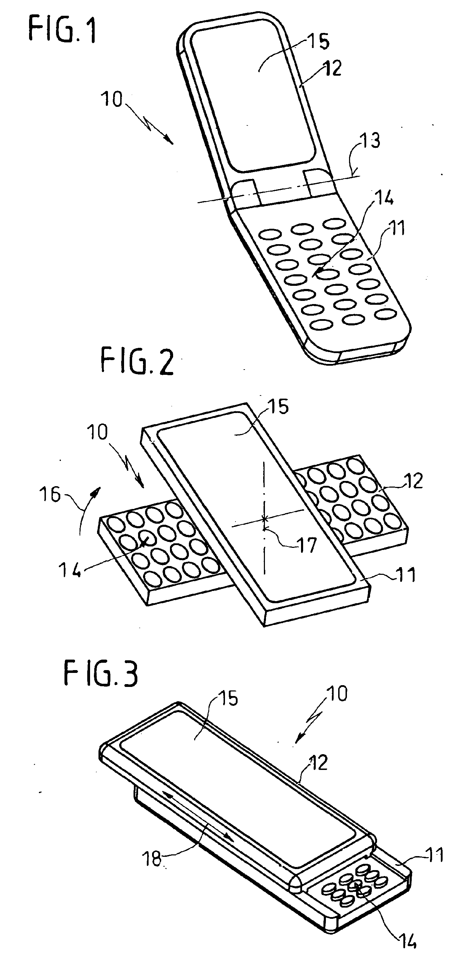

Fig. 1 stellt schematisch ein Handy 10, und zwar ein Klapphandy dar. Dessen wesentliche Bestandteile sind ein erster Geräteteil 11 und ein zweiter Geräteteil 12, die um eine - bezogen auf eine übliche Handhaltung - horizontale Achse 13 relativ zueinander schwenkbar sind. Fig. 1 zeigt das Klapphandy in geöffnetem Zustand, also mit aufgeklapptem zweitem Geräteteil 12, den man bei Klapphandys auch als Deckel bezeichnet. Dies ist eine der beiden definierten End- oder Gebrauchsstellungen. Klappt man den Geräteteil 12 auf das Grundgeräteteil 11, schließt also den Deckel 12, ist die zweite Gebrauchsstellung oder Ruheposition eingestellt.

Wie üblich, befindet sich im ersten oder Basisgeräteteil 11 eine allgemein mit 14 bezeichnete Tastatur sowie die wesentliche elektronische Ausrüstung. Im zweiten Geräteteil 12 oder Deckel ist beispielhaft ein Display 15 integriert.

Bei dem in Fig. 2 dargestellten Mobiltelefon handelt es sich um eine relativ neuartige Gattung der sogenannten Drehhandys. Hier enthält der erste Geräteteil 12 nahezu alle wesentlichen elektronischen Bauelemente sowie ein Display 15 und auch eine - nicht dargestellte - Grundtastatur zur Bedienung des Telefon-, Mail- oder sonstigen Eingabesystems. Der zweite Geräteteil 11 enthält die Tasten einer vollständigen, insbesondere Schreibmaschinentastatur 14. Fig. 2 zeigt das Geräte im geöffneten Zustand, in dem also zusätzlich zum eigentlichen Handy 12 die Tastatur 14 zugänglich ist.

Wird der Geräteteil 11 etwa in Pfeilrichtung 16 um eine lotrechte Achse 17 relativ zum anderen Geräteteil 12 oder unter den anderen Geräteteil 12 verschwenkt, wird die zweite Betriebsstellung bzw. Normalposition erreicht.

Fig. 3 zeigt eine dritte heute gebräuchliche Gerätegattung mit zueinander in der Lage veränderbaren Geräteteilen, und zwar ein Schiebehandy. Auch dieses Mobiltelefon umfasst einen ersten Geräteteil 11, der die elektrische Grundeinrichtung enthält und eine mit 14 bezeichnete Tastatur sowie als zweiten Geräteteil 12 einen Deckel, der in Richtung des Doppelpfeils 18 relativ zum ersten Geräteteil 11 hin und her geschoben werden kann. Der zweite Geräteteil 12 oder Schiebedeckel (auch Slider genannt) enthält in der Regel ein Display 15 und eine hier nicht dargestellte Grundtastatur, die es beispielsweise erlaubt, eingehende Anrufe anzunehmen. Fig. 3 zeigt den geöffneten Zustand des Gerätes, bei welchem der zweite Geräteteil 12 durch Aufschieben die Tastatur 14 im unteren Geräteteil freigegeben hat.

Bei den Geräten aller drei dargestellten und erläuterten Gattungen ist es für eine als angenehm empfundene Bedienung wichtig, dass (nur) die jeweils beiden Gebrauchsstellungen eindeutig eingenommen werden. Das Klapphandy nach Fig. 1 soll demnach entweder wie dargestellt offen oder geschlossen sein, das Drehhandy nach Fig. 2 entweder in Normalposition oder einer wie dargestellt Zugriffe auf die Volltastatur ermöglichenden Position und schließlich das Schiebehandy nach Fig. 3 in der geschlossenen Position und der dargestellten zweiten Position mit dann zugänglicher Tastatur 14.

Zwischenstellungen sollen deshalb vermieden werden, wozu sich die Erfindung vom Grundsatz her eines Federmechanismus bedient, der beim Klapphandy nach Fig. 1 den Deckel 12, beim Drehhandy nach Fig. 2 den Tastaturteil 12 und beim Klapphandy nach Fig. 3 den Deckel 12 relativ zum jeweiligen ersten Geräteteil 11 automatisch in die eine oder in die andere Gebrauchsstellung zwingt, sobald eine zielgerichtete Kraft auf wenigstens einen der relativ zueinander beweglichen Geräteteile ausgeübt wird.

Die Erfindung erreicht dies in einfacher, kompakter und sehr wirksamer Art und Weise mit Hilfe wenigstens einer stab- oder blattförmigen Biegefeder als Federorgan an dem einen Geräteteil einerseits und einem damit zusammenwirkenden Steuerorgan am anderen Geräteteil andererseits. Dies wird im einzelnen nachfolgend für die drei zuvor beschriebenen Mobiltelefon-Typen erläutert.

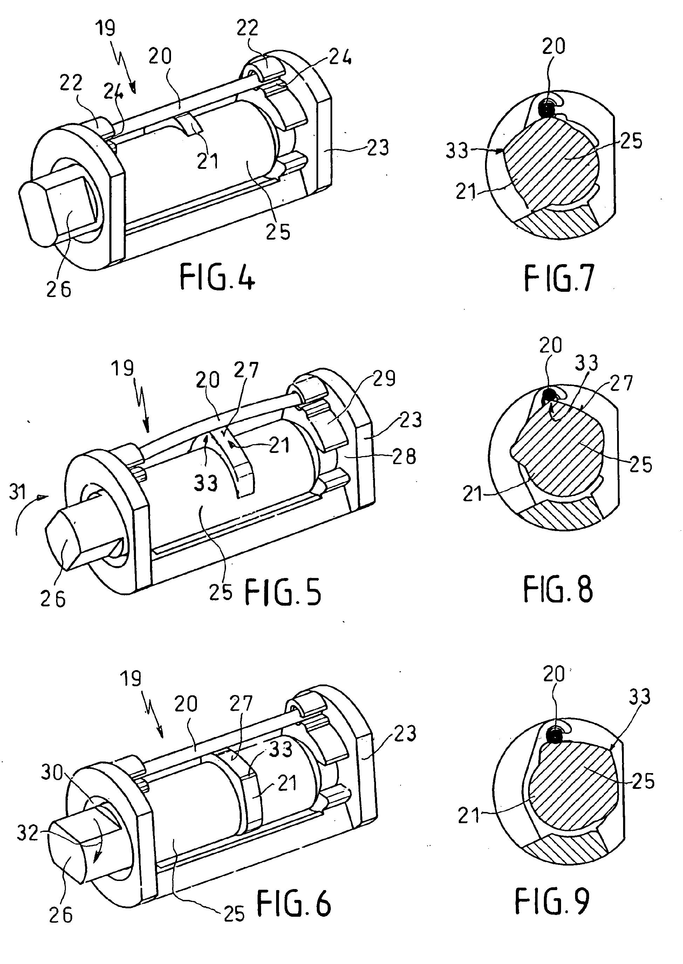

In den Fig. 4 bis 9 sind verschiedene Positionen eines bei dem Klapphandy nach Fig. 1 verwendeten erfindungsgemäßen Steuermechanismus dargestellt. Dieser Steuermechanismus 19 weist als wesentliche Elemente eine Biegefeder 20 sowie ein damit zusammenwirkendes Steuerorgan 21 auf. Beim dargestellten Ausführungsbeispiel ist die Biegefeder 20 stabförmig und besteht beispielsweise aus einem Kürzungsabschnitt eines Federdrahtes. Selbstverständlich kann auch eine Blattfeder in Frage kommen, da es sich auch dabei um eine Biegefeder im Sinne der Erfindung handelt.

Die Biegefeder 20 ist langgestreckt und mit ihren beiden Enden in Aufnahmen 22 eines mit 23 bezeichneten Lagerbocks aufgenommen. Die Aufnahmen 22 weisen Schlitze 24 auf, bilden also gewissermaßen Schlitzhülsen, in die die Enden der Biegefeder 20 einfach von außen eingeclipst werden können. Im übrigen sind zumindest nicht beide Enden der Biegefeder 20 fest eingespannt, da sich der Abstand der Federenden bei deren weiter unten zu beschreibender Auslenkung verkürzt. Beim Ausführungsbeispiel sind beide Enden der Biegefedern 20 in den Aufnahmen 22 mit Freiheitsgrad in Längsrichtung schwimmend gelagert.

Des weiteren lagert der Lagerbock 23 eine Steuerwelle 25, die in bevorzugt einstückig-stoffschlüssiger Ausführung das Steuerorgan 21 trägt. Man hat sich vorzustellen, dass der Lagerbock 23 z.B. bei dem Klapphandy nach Fig. 1 bewegungseinheitlich, also fest, mit dem ersten Geräteteil 11 verbunden ist. Der zweite Geräteteil 12, der Deckel, ist folglich mit dem in Fig. 4 bis 6 bezeichneten Kupplungszapfen 26 bewegungseinheitlich verbunden. Das Steuerorgan 21 ist eine Kurvenscheibe, deren Stirnflächen eine Steuerkurve 27 definieren. Dies geht besonders gut aus den Fig. 7 bis 9 hervor.

Die Steuerwelle 25 ist mit ihrem in den Fig. 4 bis 6 dargestellten rechten Ende in ein aufgrund eines Schlitzes 28 von außen zugängliches Lager 29 eingeclipst. Dieses Einclipsen geschieht, nachdem das andere, den Mitnehmerzapfen 26 aufweisende Ende von der Innenseite des Lagerbocks 23 her durch die mit 30 bezeichnete Öffnung im Lagerbock 23 hindurchgesteckt wurde.

Die in den Fig. 4 bis 6 dargestellten Teile können sämtlich als Kunststoffspritzgießteile ausgeführt sein. Allerdings wird die Biegefeder 20 in der Regel wohl eine Metallfeder sein.

Nimmt man an, dass Fig. 4 den Steuermechanismus in derjenigen Stellung zeigt, die dem geöffneten Klapphandy nach Fig. 1 entspricht, wird folgendes deutlich:

Schließt man den Deckel 12, so nimmt dieser durch seine bewegungseinheitliche Kupplung mit dem Achszapfen 26 die Steuerwelle 25 und damit auch die Nockenscheibe 21 als dem Steuerorgan des Steuermechanismus in Richtung des Pfeiles 31 in Fig. 5 mit, die insoweit eine Zwischenstellung zeigt. Von dort geht es durch weitere Drehung im gleichen Sinne in Richtung des Pfeiles 32 der Fig. 6 in die Schließstellung des Deckels.

In der deckeloffenen Stellung des Geräts 10 nach Fig. 1 entsprechend Fig. 4 berühren sich Steuerorgan 21 und Biegefeder 20 ohne nennenswerte gegenseitige Kraftbeeinflussung. Das gleiche gilt für den geschlossenen Zustand des Klappdeckels 12 in der anderen Endstellung des Steuermechanismus 19 entsprechend Fig. 6. Wird jedoch, ausgehend von Fig. 4 (aufgeklappter Deckel) oder Fig. 6 (geschlossenes Handy) der Deckel 12 in die jeweils andere Richtung bewegt, bewegt sich mit der Drehbewegung der Steuerwelle 25 das Steuerorgan 21 entsprechend. Seine Steuerfläche 27 steigt an und lenkt die Biegefeder 20 zunehmend stärker aus, wie es Fig. 5 deutlich veranschaulicht. Dies geschieht solange, bis die Berührungslinie zwischen der Steuerkurve 27 und der Biegefeder 20 ihren Höhepunkt erreicht hat. Das ist in Fig. 5 dargestellt. In der zugehörigen Querschnitts-Fig. 8 sieht man, dass die Steuerkurve 27 der Nockenscheibe 21 die Biegefeder 20 jetzt mit einer spitzen Erhöhung 28 kontaktiert. In dieser Stellung herrscht also ein äußerst labiler Zustand. Ein nur sehr leichtes Anstoßen des Deckels in Öffnungs- oder Schließrichtung bewirkt ein Zuschnappen oder Aufschnappen des Deckels.

Allerdings sei zum besseren Verständnis darauf hingewiesen, dass sich diese, lediglich zur Erläuterung des Steuermechanismus wichtige, labile Stellung als solche - wenn überhaupt - nur rein zufällig ausnahmsweise ergeben kann, im normalen Betrieb jedoch praktisch nicht vorkommt.

Wenn weiter oben ausgeführt wurde, dass in den Endstellungen der Geräteteile 11 und 12, denen die Steuermechanismus-Stellungen der Fig. 4 und 6 entsprechen, das Steuerorgan 21 praktisch keine Kräfte auf die Biegefedern 20 ausübt, so sei doch angemerkt, dass man diese beiden Stellungen des Steuermechanismus 19 auch dazu nutzen kann, die beiden charakteristischen Endstellungen des Gerätes 10, also die Deckel-Offenstellung und die Deckel-Schließstellung, mit Unterstützung zusätzlich zu sichern. Hierzu könnten beispielsweise an der Steuerkurve 27 Endanschläge und/oder Einbuchtungen vorgesehen sein, an bzw. in die sich die Biegefeder 20 in den Endstellungen an- bzw. einlegt, so dass diese Stellungen erst mit gewissem Kraftaufwand auch auf Seiten des Steuermechanismus überwunden werden müssen, um die betreffende Endstellung verlassen zu können.

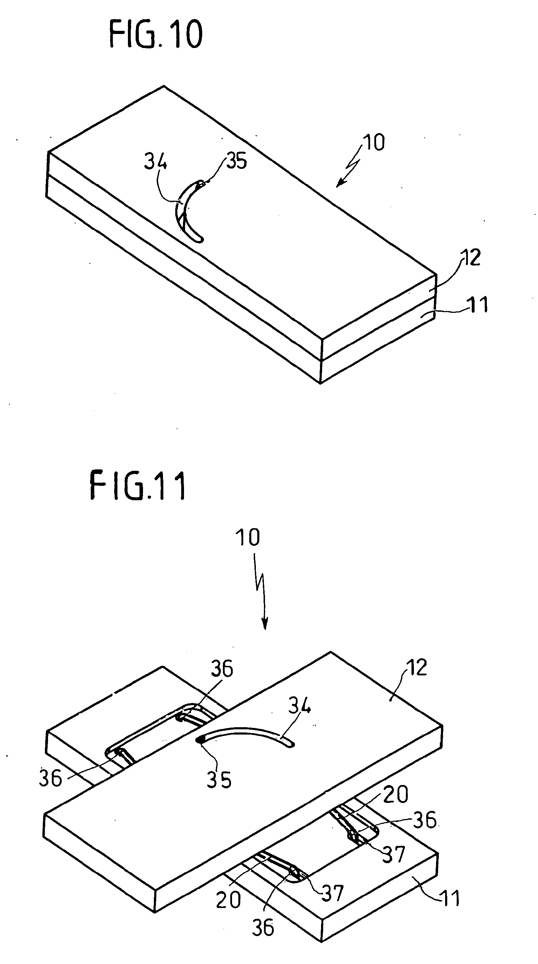

Wie man den Steuermechanismus 19 des bislang anhand eines Klapphandys beschriebenen Art mit geringfügiger Modifikation für ein Drehhandy verwenden kann, zeigen die Fig. 10 bis 14.

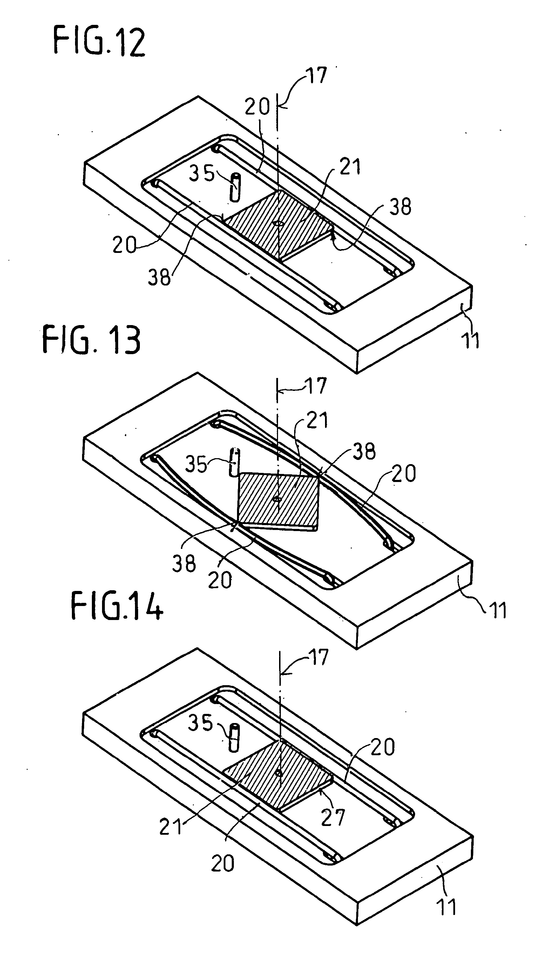

Fig. 10 veranschaulicht sehr schematisch das geschlossene Gerät, welches in Fig. 2 offen gezeigt ist. Mit 34 ist eine die Drehbewegung um 90° begrenzende bogenschlitzförmige Kulisse im Geräteteil 12 und mit 35 ein damit zusammenwirkende Anschlagzapfen im Geräteteil 11 bezeichnet. Im Geräteteil 12 befinden sich - in Längsrichtung desselben ausgerichtet sowie in zueinander paralleler Zuordnung - zwei Biegefedern 20 der bereits beschriebenen Art - siehe Fig. 12 bis 14, aber auch Fig. 11. Die jeweils beiden Enden der Biegefedern 20 weisen Abbiegungen 36 auf, mit denen die Enden der Biegefedern 20 im Geräteteil 12 fixiert sind. An zumindest jeweils einem Ende sind die entsprechenden Aufnahmen 37 in diesem Geräteteil 11 als Langlöcher ausgeführt, um den sich bei Auslenkung der Biegefedern 20 verkürzenden Abstand ihrer Enden 36 zu berücksichtigen.

Da bei diesem Ausführungsbeispiel die Biegefedern 20 in dem mit 11 bezeichneten Geräteteil untergebracht sind, ist das Steuerorgan 21 folglich drehfest mit dem anderen Geräteteil 12 verbunden.

Bei dem Ausführungsbeispiel nach den Fig. 12 bis 14 ist das Steuerorgan 21 als dünne Platte mit quadratischem Umriss ausgeführt. Demzufolge bilden die Seitenflächen dieses flachquerschnittigen Quaders die Steuerflächen 27 aus. Wie diese Figuren anschaulich zeigen, liegen das Steuerorgan 21 und die beiden Biegefedern 20 in derselben Ebene und innerhalb einer Grundebene des Geräteteils 11. Diese Anordnung ist vor allem in der Höhe besonders platzsparend.

Geht man bezüglich der Funktion des Steuermechanismus 19 bei Betrachtung der Fig. 12 bis 14 davon aus, dass man relativ zu dem dort dargestellten unteren Geräteteil 11 den oberen Geräteteil 12 um eine lotrechte Achse 17 verschwenkt, drehen sich entsprechend die Steuerflächen 27 mit. Während in den beiden Endlagen das Steuerorgan 21 die beiden Biegefedern 20 etwa planparallel mit ebenen Flächen tangiert, gelangt jeweils eine Ecke (z.B. die in Fig. 12 mit 38 bezeichnete Ecken) gegen die Biegefedern 20 und spreizen sie während der Drehbewegung zunehmend stärker auseinander. In Fig. 13 ist die maximale Federkraft erreicht und es liegt, da die Biegefedern 20 nur von scharfen Ecken 36 des Steuerorgans 21 kontaktiert werden, eine sehr instabile Lage vor.

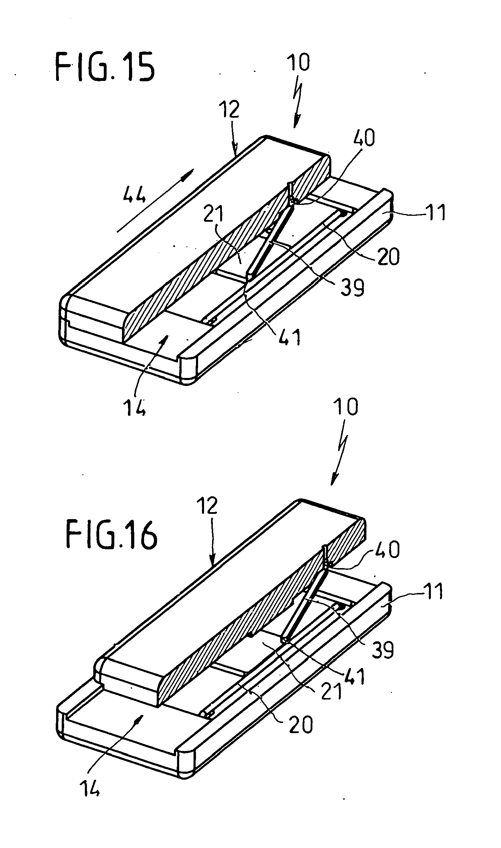

Auch bei diesem Drehhandy ist demnach die Auslegung des Steuermechanismus so getroffen, dass er aus einer ersten stabilen Lage (Fig. 12) über eine Totpunktstellung (Fig. 13) eine zweite definierte Stellung (Fig. 14) oder umgekehrt steuert. In der nicht gewünschten instabilen Mittelstellung gemäß Fig. 13 ist die Federkraft am höchsten. Das bedeutet, dass die Federkräfte in jedem Falle dazu neigen, die beiden Geräteteile 11 und 12 zwangsweise in die eine oder andere gewünschte Endstellung zu überführen.

Die Erfindung hat nun erkannt, dass man den Steuermechanismus, wie er anhand des Drehhandys beschrieben wurde, mit nur geringfügiger Modifizierung auch bei einem Schiebe- oder Sliderhandy verwenden kann. Ein derartiger Steuermechanismus ist schematisch in den Fig. 15 bis 19 dargestellt.

Die Besonderheit besteht hierbei in einem in den Fig. 15 bis 19 mit 39 bezeichneten Lenker. ln einem einfachen Ausführungsfall handelt es sich hierbei um einen Lenkerstab, dessen eines, mit 40 bezeichnetes Ende schwenkbeweglich, aber längs- bzw. biegesteif an dem Geräteteil 12 verankert ist (vgl. insbesondere die Fig. 15 und 16) und dessen anderes Ende 41 mit Abstand von der vertikalen Schwenkachse 17 am Steuerorgan 21 angreift.

Die Anordnung der Biegefedern 20 ist die gleiche wie bei dem vorauf beschriebenen Beispiel an einem Drehhandy. Auch hier ist das Steuerorgan 21 im wesentlichen als quadratische Platte ausgeführt und insoweit identisch mit dem Steuerorgan 21 der vorauf beschriebenen Ausführungsform. Ein erster Unterschied besteht im exzentrischen Angriff des Lenkers 39 an dem Steuerorgan 21.

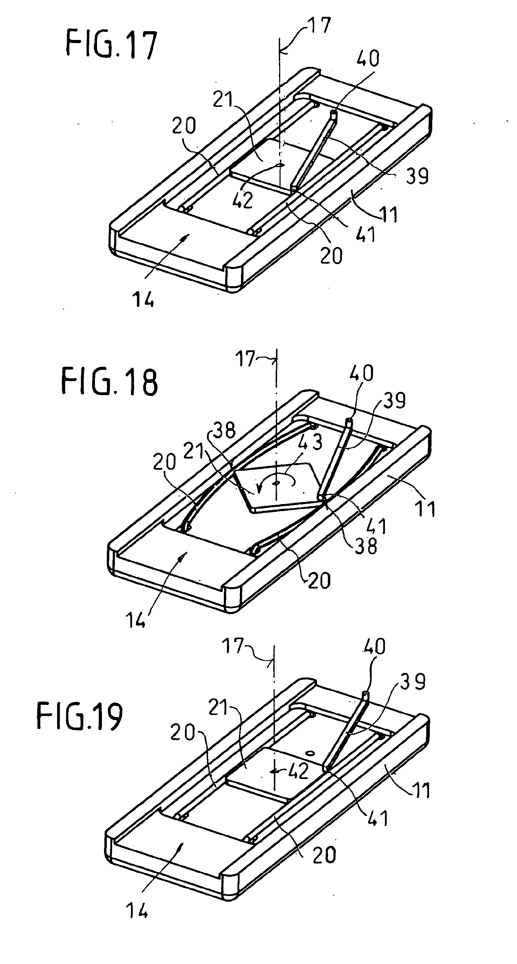

Stellt man sich nun vor, der obere Geräteteil 12 würde gegenüber dem unteren Geräteteil 11 aus der Stellung der Fig. 15 in Richtung des Pfeiles 44 bewegt, so zieht der Lenker 39 an dem Steuerorgan 21 und dreht es, ausgehend von der Ausgangslage nach Fig. 17 in Richtung des Pfeiles 43 (Fig. 18) derart, dass - entsprechend der Funktion des voraufgegangenen Ausführungsbeispiels - die quadratische Platte des Steuerorgans 19 um dessen Mittelpunkt 42 verdreht wird bei gleichzeitigem Auseinanderspreizen und demzufolge Spannen der Biegefedern 20, bis die Maximalstellung erreicht wird, die in Fig. 18 dargestellt ist. Diese ist wiederum dadurch gekennzeichnet ist, dass einander gegenüberliegende Ecken 38 des Steuerorgans 21 die Biegefedern 20 beaufschlagen. In der gegenüber dem Geräteteil 11 offengeschobenen Endlage des Geräteteils 12 ist die in Fig. 19 dargestellten zweite Endlage erreicht.

Eine weitere Besonderheit gegenüber dem in den Fig. 2 sowie 10 bis 14 dargestellten Ausführungsbeispiel besteht in der Lagerung des Steuerorgans 21. Beim Drehhandy ist das Steuerorgan 21 drehfest mit dem Geräteteil 11 verbunden. Bei der Ausführungsform "Schiebehandy" drehen die Geräteteile 11 und 12 nicht; es findet vielmehr eine geradlinige Bewegung statt. Demzufolge muss hier das Steuerorgan 21 bezüglich seiner Drehbewegung um die Hochachse 17 vom Geräteteil 12 entkoppelt werden. Deshalb ist hier das Steuerorgan 21 dreh- bzw. schwenkbar im Geräteteil 11 gelagert. So kann man sich etwa den mit 42 bezeichneten Drehpunkt körperlich als Zapfenlager vorstellen.

Auch hier ist also die Anordnung so getroffen, dass das schwenkbare Steuerorgan 19 beim Übergang von der einen in die andere Endstellung des Geräts 10 eine Totpunktstellung überwinden muss, aus der heraus es unter Wirkung der rückstellenden Kraft der Biegefedern 20 selbsttätig und zwingend in die jeweilige Endstellung überführt wird.

Es sei darauf hingewiesen, dass die wesentlichen Funktionsteile, wie der Steuermechanismus und die wenigstens eine Biegefeder sowie ggf. der Lenker jeweils demjenigen Geräteteil 11 oder 12 zugeordnet werden, der zu deren Anordnung und Unterbringung in der Praxis am besten geeignet ist. Insoweit ist die anhand der Figurenbeschreibung vorgenommene Zuordnung zu einer Geräte-Oberschale bzw. -Unterschale keinesfalls beschränkend zu verstehen.

Auch ist die in den Figuren 12 bis 19 dargestellte und oben beschriebene quadratische Platte als Steuerorgan nur beispielhaft. Ein Steuerorgan im Sinne der Erfindung kann jede zur Erreichung des deutlich beschriebenen Zwecks geeignete Form haben, also etwa auch eine drei- oder andere vieleckige Form oder eine zweckdienliche Steuerkurve im üblich verstandenen Sinn aufweisen.

## Patentansprüche

1. Gerät (10) mit zwei relativ zueinander bewegbaren Geräteteilen (11, 12) wie Mobiltelefon mit einem Basis- bzw. Tatstaturteil (Unterschale) und einem Displayteil (Oberschale), wobei die beiden Geräteteile (11, 12) eine erste und eine zweite stabile Endposition zueinander einnehmen können und wobei ein Steuermechanismus (19) vorgesehen ist, der die beiden Geräteteile (11, 12) unter Vermittlung wenigstens eines Federorgans (20) aus einer beliebigen Zwischenposition heraus in die eine oder andere relative Endposition drängt, **dadurch gekennzeichnet, dass** das Federorgan (20) als stab-oder blattförmige Biegefeder ausgebildet ist, die an dem ersten (11) der beiden Geräteteile (11, 12) gehalten ist, während mit dem zweiten Geräteteil (12) ein Steuerorgan (21) mindestens mittelbar bewegungsverbunden ist, welches das Federorgan (20) bewegungsabhängig auslenkt und entsprechend spannt.

2. Gerät nach Anspruch 1, **dadurch gekennzeichnet, dass** die wenigstens eine Biegefeder (20) beidendig fixiert ist und das Steuerorgan (21) die Biegefeder (20) im wesentlichen mittig beaufschlagt.

3. Gerät nach Anspruch 1 oder 2, **dadurch gekennzeichnet, dass** die wenigstens eine Biegefeder (20) mit ihren beiden Enden in Biegefeder-Aufnahmen (22) des zugehörigen Geräteteils eingesteckt bzw. eingerastet ist.

4. Gerät nach Anspruch 1 oder 2, **dadurch gekennzeichnet, dass** das Steuerorgan (21) als Nockenscheibe ausgebildet ist, deren Umfangsfläche eine die Biegefeder (20) beaufschlagende Steuerkurve (27) aufweist.

5. Gerät nach einem der Ansprüche 2 bis 4, **dadurch gekennzeichnet, dass** das Steuerorgan (21) eine Schwenkachse aufweist, die sich im wesentlichen parallel zur Längserstreckung der Biegefeder (20) erstreckt.

6. Gerät nach einem der Ansprüche 2 bis 4, **dadurch gekennzeichnet, dass** das Steuerorgan (21) eine Schwenkachse aufweist, die sich quer zur Längserstreckung der Biegefeder (20) erstreckt.

7. Gerät nach Anspruch 5 oder 6, **dadurch gekennzeichnet, dass** die Schwenkachse des Steuerorgans (20) mit der Achse (13; 17) zusammenfällt, um welche die beiden Geräteteile (11, 12) relativ zueinander verschwenkbar sind.

8. Gerät nach Anspruch 7, **dadurch gekennzeichnet, dass** die Biegefeder (20) in einem dem einen Geräteteil zugeordneten Lagerbock (23) eingespannt ist, der zugleich eine Steuerwelle (25) für das dem anderen Geräteteil zugeordnete Steuerorgan (21) lagert.

9. Gerät nach Anspruch 8, **dadurch gekennzeichnet, dass** der Lagerbock schlitzhülsenförmige Aufnahmen (22) zum Einclipsen der Enden der Biegefeder (20) aufweist.

10. Gerät nach Anspruch 8 oder 9, **dadurch gekennzeichnet, dass** der Lagerbock (23) mindestens eine schlitzhülsenförmige Aufnahme (29) zum Einclipsen wenigstens eines Endes der Steuerwelle (25) aufweist.

11. Gerät nach einem der Ansprüche 8 bis 10, **dadurch gekennzeichnet, dass** das Steuerorgan (21) werkstoffeinheitlich-stoffschlüssig mit der Steuerwelle (25) ausgebildet ist.

12. Gerät nach Anspruch 6, **dadurch gekennzeichnet, dass** das Steuerorgan (21) eine Hauptebene definiert, in der auch die wenigstens eine Biegefinder (20) angeordnet ist.

13. Gerät nach einem der vorhergehenden Ansprüche, **dadurch gekennzeichnet, dass** zwei in einem Parallelabstand zueinander angeordnete Biegefedern (20) vorgesehen sind, zwischen denen das Steuerorgan (21) in derselben Ebene angeordnet ist.

14. Gerät nach einem der vorhergehenden Ansprüche, **dadurch gekennzeichnet, dass** das Steuerorgan (21) mit dem zugehörigen Geräteteil (12) über einen Lenker (39) verbunden ist, der eine Linearbewegung des Geräteteils in eine Drehbewegung des Steuerorgans (21) umsetzt und dass das Steuerorgan in dem anderen Geräteteil (11) dreh- bzw. schwenkbar angeordnet bzw. gelagert ist.

15. Gerät nach Anspruch 14, **dadurch gekennzeichnet, dass** der Lenker (39) eine Lenkerstange ist, deren beide Enden (40) jeweils mit dem zugeordneten Geräteteil und dem Steuerorgan (21) schwenkbeweglich steckverbunden sind.
